# EUROPÄISCHE PATENTANMELDUNG

(11) **EP 2 194 007 A1**
(43) Veröffentlichungstag der Anmeldung: **09.06.2010**
(21) Anmeldenummer: 09014762.0
(22) Anmeldetag: 26.11.2009
(51) Int. Cl.: B65F 1/14, C05F 17/02

(54) **Vorrichtung zur Aufnahme von Abfall und/oder eines Abfallbehälters**

(30) Priorität: 05.12.2008 DE 202008015996 U
(71) Anmelder: Koller, Johannes, 4792 Münzkirchen (AT)
(72) Erfinder: Koller, Johannes, 4792 Münzkirchen (AT)
(74) Vertreter: advotec.

(57) **Zusammenfassung**

Vorrichtung zur Aufnahme von Abfall und/oder eines Abfallbehälters mit einer Öffnung zur Aufnahme des Abfalles und/oder des Abfallbehälters, wobei das Erscheinungsbild der Vorrichtung einem natürlichen oder künstlichen Gegenstand nachgebildet und somit nicht als Abfallaufnahmeeinrichtung erkennbar ist.

## Beschreibung

Die vorliegende Erfindung betrifft eine Vorrichtung zur Aufnahme von Abfall und/oder eines Abfallbehälters mit einer Öffnung zur Aufnahme des Abfalls und/oder des Abfallbehälters.

Vorrichtungen zur Aufnahme von Abfall sind in der Form von z.B. Mülltonnen oder Biotonnen bekannt. Auch Vorrichtungen zur Aufnahme eines Abfallbehälters, insbesondere Verkleidungen für Abfallbehälter, wie beispielsweise Mülltonnen, sind ebenfalls aus dem Stand der Technik bekannt. So beschreibt DE 203 13 563 einen Behälter mit einem schließbaren Deckel, welche insbesondere zur Aufnahme bzw. Verkleidung einer Mülltonne verwendet werden kann.

Auch die Gebrauchsmusterschrift DE 20 2005 017 712 beschreibt eine derartige Vorrichtung zum Verkleiden eines Abfallbehälters, insbesondere in Form einer für private Haushalte vorgesehenen Mülltonne.

Der Nachteil der aus dem Stand der Technik bekannten Vorrichtungen zur Aufnahme von Abfall bzw. zur Aufnahme bzw. Verkleidung eines Abfallbehälters besteht darin, dass sie allesamt als Fremdkörper im Landschaftsbild wirken und ein optisch äußerst unattraktives Erscheinungsbild abgeben.

Der vorliegenden Erfindung liegt die Aufgabe zugrunde, eine Vorrichtung zur Aufnahme von Abfall und/oder eines Abfallbehälters zur Verfügung zu stellen, welche die Nachteile des Standes der Technik überwindet.

Diese Aufgabe wird durch eine Vorrichtung der Eingangs genannten Art gelöst, wobei das Erscheinungsbild der Vorrichtung einem natürlichen oder künstlichen, insbesondere künstlerischen Gegenstand nachgebildet und somit nicht als Abfallaufnahmeeinrichtung erkennbar ist.

Die erfindungsgemäße Vorrichtung ist in idealer Art und Weise an die jeweilige Umgebung anpassbar. So ist es bei einer Vorrichtung, deren Erscheinungsbild an einen natürlichen Gegenstand angepasst ist, sehr gut möglich, diesen in einen Garten zu integrieren.

Bei einer bevorzugten Ausführungsform der erfindungsgemäßen Vorrichtung weist diese die Form und das Erscheinungsbild eines Baumstammes auf. Wird eine derartige Vorrichtung beispielsweise in einem Garten positioniert, ist diese nicht mehr als solche erkennbar. Sie kann in idealer Weise in das Landschaftsbild integriert werden.

Bei einer weiteren bevorzugten Ausführungsform der erfindungsgemäßen Vorrichtung weist diese die Form eines Steines oder Felsens auf. Sie kann auch aus einem solchen gefertigt sein. Eine derartige Vorrichtung ist insbesondere zum Aufstellen in einem Steingarten geeignet. Selbstverständlich eigenen sich die genannten Ausführungsformen nicht nur zum Positionieren in Gärten oder Vorgärten, sondern auch zum Aufstellen in unnatürlichem Gelände, wie beispielsweise auf Straßen, Innenhöfen, etc. Auch in derartigen Umgebungen sind die genannten Ausführungsformen nicht als Abfallaufnahmeeinrichtungen erkennbar.

Eine weitere bevorzugte Ausführungsform der erfindungsgemäßen Vorrichtung weist die Form einer Statue (z.B. antiken Statue), Vase oder Säule auf. Auch durch diese Formen wird erreicht, dass die erfindungsgemäße Vorrichtung als solche nicht erkannt wird und ideal an die jeweiligen Umweltgegebenheiten angepasst werden kann.

Mit Vorteil weist die erfindungsgemäße Vorrichtung Belüftungsöffnungen auf, die vorzugsweise derart ausgebildet und positioniert sind, dass sie als solche nicht erkennbar sind. Durch Belüftungsöffnungen wird insbesondere bei Biotonnen erreicht, dass ein Kompostierungsvorgang optimiert wird. Bei der erfindungsgemäßen Vorrichtung sind diese Belüftungsöffnungen insbesondere in das Design der Vorrichtung unauffällig integriert. Weist die erfindungsgemäße Vorrichtung beispielsweise die Form eines Felsens auf, so wirken die Belüftungsöffnungen wie natürliche Mulden oder Löcher im Felsen.

Vorzugsweise weist die erfindungsgemäße Vorrichtung eine Türe und/oder einen Deckel zum Einbringen bzw. Entnehmen von Abfall und/oder eines Abfallbehälters auf.

Vorzugsweise weist die erfindungsgemäße Vorrichtung in ihrem Inneren Abstandshalter für den aufgenommenen Abfall, insbesondere Kompost auf. Durch diese Abstandshalter wird erreicht, dass Luftsauerstoff besser an den Abfall bzw. Kompost herantreten kann. Durch die Abstandshalter, welche beispielsweise Metallschienen sind, die an der Innenwand der erfindungsgemäßen Vorrichtung angebracht sind, wird zumindest teilweise verhindert, dass der Abfall bzw. Kompost direkten Kontakt mit der Innenwand der Vorrichtung hat.

In der Regel ist die erfindungsgemäße Vorrichtung aus Kunststoff oder Metall gefertigt. Die erfindungsgemäße Vorrichtung kann beispielsweise eine Biotonne oder Mülltonne sein. Bei einer weiteren Ausführungsform ist die erfindungsgemäße Vorrichtung eine Verkleidung für eine Müll- oder Biotonne.

Weitere Merkmale der Erfindung ergeben sich aus der nachfolgenden Beschreibung von bevorzugten Ausführungsformen der Erfindung in Verbindung mit den Zeichnungen und den Unteransprüchen. Hierbei können die einzelnen Merkmale jeweils für sich allein oder in Kombination miteinander verwirklicht sein.

In den Zeichnungen zeigen:
- Fig. 1a und 1b:: eine erfindungsgemäße Vorrichtung in Form eines Felsens;
- Fig. 2:: eine erfindungsgemäße Vorrichtung zur Aufnahme einer Mülltonne oder Biotonne;
- Fig. 3:: eine erfindungsgemäße Vorrichtung zur Aufnahme einer Mülltonne oder Biotonne in Form einer Säule.

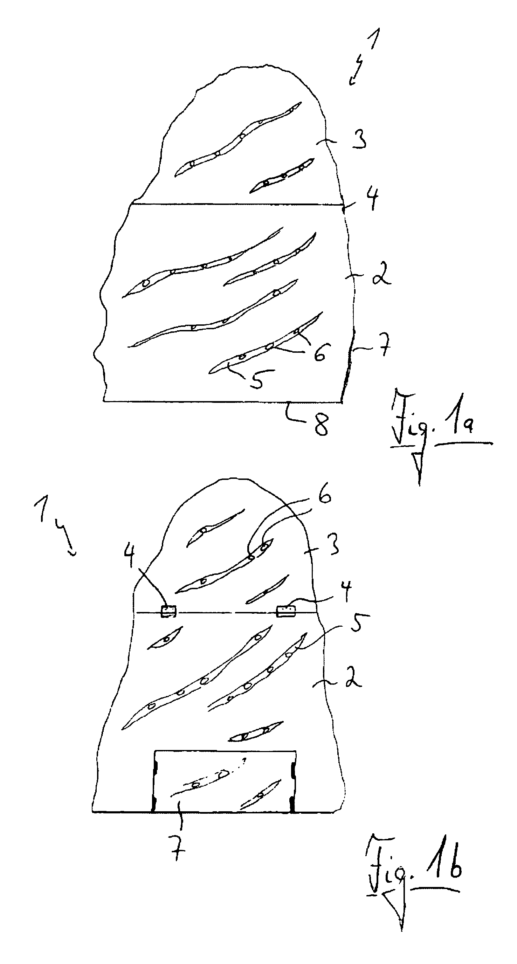

Die Figuren 1a und 1b zeigen eine erfindungsgemäße Vorrichtung in Form eines Komposters (Biotonne) 1. Figur 1a zeigt eine Seitenansicht des Komposters 1, Figur 1b zeigt eine Rückseitenansicht des Komposters 1. Der Komposter 1 besteht aus einem Hohlkörper 2 und einem Deckel 3, der mit dem Körper 2 über zwei Scharniere 4 verbunden ist. Dadurch kann der Deckel aufgeklappt und wieder geschlossen werden. Der Komposter 1 weist in seiner Oberfläche Mulden 5 auf. Die Mulden 5 imitieren natürliche Felsmulden. In den Mulden 5 sind Belüftungsöffnungen 6 eingebracht. Durch die Positionierung der Belüftungsöffnungen in den Mulden 5 sind diese nur schwer als Belüftungsöffnungen zu erkennen. Die Belüftungsöffnungen 6 in den Mulden 5 erscheinen wie natürliche Öffnungen in einem Felsen. Auf der Rückseite des Komposters 1 ist im Bereich des Bodens 8 eine Türe 7 angeordnet, welche geöffnet und geschlossen werden kann. Durch die Türe 7 kann beispielsweise fertiger Humus aus der Vorrichtung 1 entnommen werden. Der Komposter 1 ist aus Kunststoff gefertigt. Der Komposter 1 lässt sich in idealer Art und weise beispielsweise in Gärten, insbesondere Steingärten integrieren. Er passt sich in diesen Fällen ideal der Umgebung an und wird nicht als Komposter erkannt.

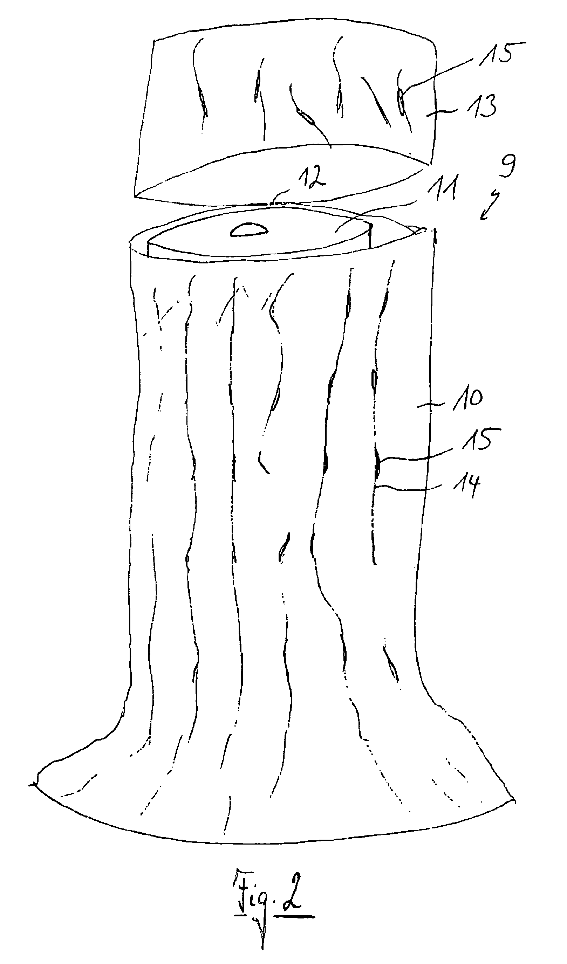

Fig. 2 zeigt eine erfindungsgemäße Vorrichtung in Form einer Mülltonnenverkleidung 9. Diese Mülltonnenverkleidung 9 weist die Form und Gestalt eines Baumstammes auf. Die Verkleidung 9 zeigt einen Grundkörper 10 zum Einstellen einer Müll- oder Biotonne 11, sowie einen, mit dem Grundkörper 10 über ein Scharnier 12 verbundenen Deckel 13. Die Oberflächenstruktur der Vorrichtung 9 ist der Oberfläche eines Baumstammes nachgebildet. So weist die Oberfläche der Verkleidung 9 natürlich wirkenden Mulden und Ritzen 14 auf. In diese Mulden und Ritzen 14 sind Belüftungsschlitze 15 eingebracht. Durch die Positionierung der Belüftungsschlitze 15 im Bereich der Mulden und Ritzen 14 treten die Belüftungsschlitze nicht als solche in Erscheinung, sondern wirken wie natürliche Strukturen in der Oberfläche des Baumstammes. Die Vorrichtung 9 kann sowohl als Verkleidung als auch als Müll- oder Biotonne als solche verwendet werden. Die Vorrichtung 9 eignet sich besonders gut zum Aufstellen in Gärten, Hinterhöfen, Vorgärten, etc. Durch die Vorrichtung 9 können optisch unattraktive Müll- oder Biotonnen verkleidet werden.

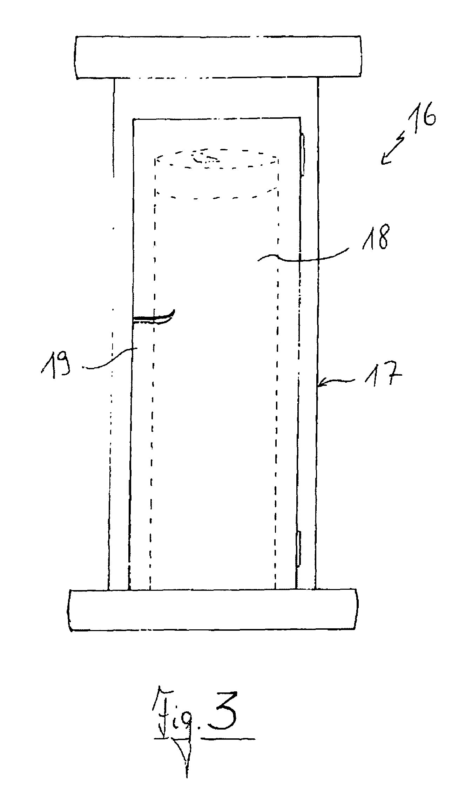

Fig. 3 zeigt eine Müll- bzw. Biotonnenverkleidung 16. Die Verkleidung 16 weist die Form und Gestalt einer antiken Säule auf. In den Korpus 17 der Säule 16 kann eine Müll- bzw. Biotonne 18 eingestellt werden. Für ein erleichtertes Einstellen bzw. herausnehmen einer Müll- bzw. Biotonne in bzw. aus der erfindungsgemäßen Vorrichtung 16 ist eine Türe 19 im Korpus 17 der Vorrichtung 16 vorgesehen. Die Türe 19 ist verschließbar. Die Vorrichtung 16 ist im Wesentlichen aus Kunststoff gefertigt.

Es versteht sich, dass noch eine Vielzahl weiterer Ausgestaltungen der erfindungsgemäßen Vorrichtung möglich sind. So können die erfindungsgemäßen Vorrichtungen beispielsweise auch als Vasen, Statuen, Brunnen, oder andere kunstvolle Gebilde ausgebildet sein. Auch versteht es sich, dass neben Kunststoff auch andere Materialien, wie beispielsweise Metall, Stein, Holz, etc. zur Herstellung der erfindungsgemäßen Vorrichtung verwendet werden können. Mit der vorliegenden Erfindung wird erreicht, dass optisch unattraktive Müll- und Biotonnen aus dem Landschaftsbild verschwinden und durch die oben genannten Abfallbehälter bzw. Abfallverkleidungen ersetzt werden.

Die erfindungsgemäße Vorrichtung kann neben der Abfallaufnahme auch zum Verstauen von Gartengeräten und/oder Werkzeug dienen.

## Patentansprüche

1. Vorrichtung zur Aufnahme von Abfall und/oder eines Abfallbehälters (11, 18) mit einer Öffnung zur Aufnahme des Abfalles und/oder des Abfallbehälters, wobei das Erscheinungsbild der Vorrichtung einem natürlichen oder künstlichen Gegenstand nachgebildet und somit nicht als Abfallaufnahmeeinrichtung erkennbar ist.

2. Vorrichtung nach Anspruch 1, **dadurch gekennzeichnet, dass** sie die Form eines Baumstammes, Steines oder Felsens aufweist.

3. Vorrichtung nach Anspruch 1, **dadurch gekennzeichnet, dass** sie die Form einer Statue, Vase oder Säule aufweist.

4. Vorrichtung nach einem der Ansprüche 1 bis 3, **dadurch gekennzeichnet, dass** sie Belüftungsöffnungen (6, 15) aufweist, die vorzugsweise derart ausgebildet und positioniert sind, dass sie als solche nicht erkennbar sind.

5. Vorrichtung nach einem der Ansprüche 1 bis 4, **dadurch gekennzeichnet, dass** sie eine Türe (19, 7) und/oder Deckel (3, 13) zum Einbringen und Entnehmen von Abfall und/oder eines Abfallbehälters (11, 18) aufweist.

6. Vorrichtung nach einem der Ansprüche 1 bis 5, **dadurch gekennzeichnet, dass** sie in ihrem Inneren Abstandhalter für den aufgenommenen Abfall, insbesondere Kompost aufweist.

7. Vorrichtung nach einem der Ansprüche 1 bis 6, **dadurch gekennzeichnet, dass** sie aus Kunststoff oder Metall gefertigt ist.

8. Vorrichtung nach einem der Ansprüche 1 bis 7, **dadurch gekennzeichnet, dass** die Vorrichtung eine Müll- oder Biotonne ist.

9. Vorrichtung nach einem der Ansprüche 1 bis 7, **dadurch gekennzeichnet, dass** sie eine Verkleidung für eine Müll- oder Biotonne ist.
